# EUROPEAN PATENT APPLICATION

(11) **EP 3 249 936 A1**
(43) Date of publication of application: **29.11.2017**
(21) Application number: 16758074.5
(22) Date of filing: 06.07.2016
(51) Int. Cl.: H04N 21/439, H04N 21/436, H04N 21/433

(54) **AUDIO DEBUGGING METHOD AND DEVICE FOR TELEVISION**

(30) Priority: 31.03.2016 CN 201610201952
(71) Applicant: LE Holdings (Beijing) Co., Ltd., Beijing 100025 (CN); Le Shi Zhi Xin Electronic Technology (Tianjin) Limited, Tianjin 300467 (CN)
(72) Inventor: PANG, Haowei, Tianjin 300467 (CN)
(74) Representative: DREISS Patentanwälte PartG mbB
(86) International application number: PCT/CN2016/088928
(87) International publication number: WO 2017/166486

(57) **Abstract**

The present disclosure relates to a method and device of audio debugging for television. In the method, when it is required to receive the audio in an external media source, the audio is sampled in an audio sampling rate of the audio and a sampling result obtained is stored; when it is required to play the audio, the sampling result is obtained again from the storage area and played. By the solution provided the disclosure, the television receives and plays an audio in an audio sampling rate of the audio itself, thereby avoiding the appearance of noise in the audio and improving the audio quality.

## Description

The present disclosure claims priority of the Chinese patent application No. 201610201952.9, titled "METHOD AND DEVICE OF AUDIO DEBUGGINGFOR TELEVSION", filed with the State Intellectual Property Office of China on March 31, 2016, the entire contents of which are incorporated herein by reference.

### TECHNICAL FIELD

The present disclosure relates to the technical field of terminal devices, and in particular, to a method and device of audio debugging for television.

### BACKGROUND

With the development of technology, the function of television is diversified increasingly. For example, now some televisions can be connected to external media sources such as DVD recorders and mobile storage devices to obtain audio-video information in the media source and play it, thereby satisfying diversified viewing requirements of users.

During the research and development of present invention, the inventor discovers that, when obtaining audio information provided by an external media source, the television may sample the audio information according to self audio sampling rate, and store the sampled audio information. When the audio is required to be played, the audio information is obtained from a storage area and played.

However, during the research and development of present invention, the inventor finds that, the audio sampling rates of some external media sources are different from the television. In this case, when the television obtains and plays an audio of the media source via its own audio sampling rate, noise may be occurred in the audio, which decreases the audio quality. For example, now the audio sampling rate of a television is generally set as 48KHz while the audio sampling rates of some external media sources are lower than 48KHz. When the television obtains and plays an audio of the media source by the audio sampling rate at 48KHz, noise may be occurred in the audio.

### SUMMARY

To overcome the problem existing in the related technology, embodiments of the present disclosure provide a method and device of audio debugging for television.

To solve the above technical problem, embodiments of the present disclosure disclose the following technical solution.

According to a first aspect, the present disclosure provides a method of audio debugging for television, including:
obtaining an audio sampling rate of an audio when the audio in an external media source is required to be received;
sampling the audio according to the audio sampling rate of the audio and storing a sampling result into a storage area; and
obtaining the sampling result from the storage area and playing it when the audio is required to be played.

Preferably, the step of obtaining an audio sampling rate of the audio includes:
receiving audio description information transmitted by the external media source; and
obtaining an audio sampling rate of the audio contained in the audio description information by analyzing the audio description information.

Preferably, the step of storing a sampling result into a storage area includes:
judging whether audio sampling rates of the audio and the television are identical after obtaining the audio sampling rate of the audio by the audio description information;
storing the sampling result into an original storage area of television if the audio sampling rates of the audio and the television are identical; and
creating a new storage area if the audio sampling rates of the audio and the television are different, and storing the sampling result into the new storage area.

Preferably, the method further includes:
building a corresponding relationship between the storage area for storing the sampling result and the sampling result when storing the sampling result.

Preferably, the method further includes:
obtaining attribute information of the audio and storing a corresponding relationship between the attribute information of the audio and the audio sampling rate of the audio; and
obtaining the audio sampling rate of the audio according to the attribute information of the audio and the corresponding relationship, when the audio is required to be received again.

According to a second aspect, the present disclosure provides a device of audio debugging for television, including:
an obtaining module configured to obtain an audio sampling rate of an audio when the audio in an external media source is required to be received;
a sampling storing module configured to sample the audio according to the audio sampling rate of the audio and store a sampling result into a storage area; and
a playing module configured to obtain the sampling result from the storage area and play it when the audio is required to be played.

Preferably, the obtaining module includes:
a description information receiving unit configured to receive audio description information transmitted by the external media source; and
a sampling rate obtaining unit configured to obtain an audio sampling rate of the audio contained in the audio description information by analyzing the audio description information.

Preferably, the sampling storing module includes:
a judging unit configured to judge whether audio sampling rates of the audio and the television are identical after an audio sampling rate of the audio is obtained by the audio description information;
a first storing unit configured to store the sampling result into an original storage area of the television if the audio sampling rates of the audio and the television are identical; and
a second storing unit configured to create a new storage area if the audio sampling rates of the audio and the television are different and store the sampling result into the new storage area.

Preferably, the device further includes:
a first corresponding relationship building module configured to build a corresponding relationship between the storage area for storing the sampling result and the sampling result when storing the sampling result.

Preferably, the device further includes:
an attribute information obtaining module configured to obtain attribute information of the audio;
a second corresponding relationship building module configured to store a corresponding relationship between the attribute information of the audio and the audio sampling rate of the audio; and
an audio sampling rate obtaining module configured to obtain the audio sampling rate of the audio according to the attribute information of the audio and the corresponding relationship, when the audio is required to be received again.

According to a third aspect, the present disclosure provides a terminal including the device of audio debugging for television provided by the second aspect.

According to a fourth aspect, the present disclosure further provides a computer storage medium, wherein the computer storage medium may store program, and when the program is executed, part or all of steps in respective modes of the method of audio debugging for television provided by the first aspect of the present disclosure can be realized.

The technical solution of embodiments of the present disclosure may include the following advantageous effects.

The present disclosure discloses a method and device of audio debugging for television. In the present disclosure, when it is required to receive the audio in an external media source, the audio is sampled by an audio sampling rate of the audio and a sampling result obtained is stored; when it is required to play the audio, the sampling result is obtained again from the storage area and played. By the method, the television receives and plays the audio in the audio sampling rate of the audio itself, thereby avoiding the appearance of noise in the audio and improving the audio quality.

It should be understood that, the above general description and the detailed description hereinafter are merely exemplary and explanatory, which are not used to limit the scope of the present disclosure.

### BRIEF DESCRIPTION OF THE DRAWINGS

Figures here are incorporated into the description and constitute a part of the present description, showing the embodiments that meet the present disclosure, and explaining principles of the present disclosure together with the description.

In order to more clearly illustrate the technical solutions of the embodiments of the present disclosure or of the prior art, the drawings for the description of the embodiments or the prior art will be briefly described below. Apparently, other drawings may also be obtained by one of ordinary skills in the art according to these drawings without creative effort.
Figure 1 is a work flow chart of a method of audio debugging for television according to one exemplary embodiment of the present disclosure.
Figure 2 is a structure diagram of a device of audio debugging for television according to one exemplary embodiment of the present disclosure.

### DETAILED DESCRIPTION

Here, exemplary embodiments are illustrated in details by way of example, wherein the examples are shown in the accompanying drawings. Where the description below relates to figures, unless otherwise indicates, the same reference numeral in different figures represents same or like elements. The examples described in exemplary embodiments below do not represent all embodiments in conformity with the present disclosure. On the contrary, they are merely examples of the device and method in conformity with some aspects of the present disclosure as defined in the accompanying claims.

The present disclosure discloses a method and device of audio debugging for television, in order to solve the problem in the prior art that an audio sometimes has noise when the television obtains and plays the audio of the media source in its own audio sampling rate of the audio.

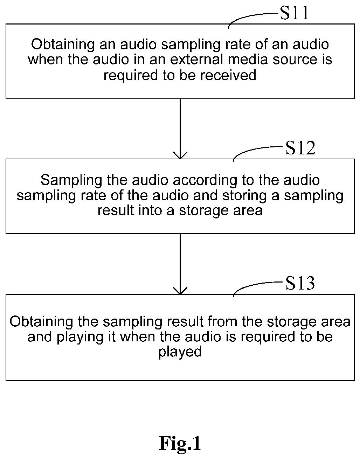

One embodiment of the present disclosure discloses a method of audio debugging for television. Referring to the work flow chart as shown in Figure 1, the method of audio debugging for television includes the following steps.

Step S11: obtaining an audio sampling rate of an audio when the audio in an external media source is required to be received.

In the present disclosure, external media sources in multiple forms are supported. For example, the external media source may be a DVD recorder, a CD recorder, an USB flash disk or other mobile storage devices and STB (set-top box), etc. The present disclosure does not limit hereto.

Step S12: sampling the audio according to the audio sampling rate of the audio and storing a sampling result into a storage area.

The television has its own fixed audio sampling rate, but audios provided by external media sources may have various audio sampling rates. In this case, in the present disclosure, after obtaining an audio sampling rate of an audio itself, the television takes samples by the audio sampling rate of the audio.

Step S13: obtaining the sampling result from the storage area and playing it when the audio is required to be played

The first embodiment of the present disclosure discloses a method of audio debugging for television. According to the method, when it is required to receive the audio in an external media source, the audio is sampled by an audio sampling rate of the audio and the sampling result obtained is stored; when it is required to play the audio, the sampling result is obtained again from the storage area and played. By the method, the television receives and plays an audio in an audio sampling rate of the audio itself, thereby avoiding the appearance of noise in the audio and improving the audio quality.

For example, if the audio sampling rate of the television is set as 48KHz while the audio sampling rate of an audio in the external media source is 44.1 KHz, then the television receives and plays the audio by the audio sampling rate at 44.1 KHz, which avoids the occurrence of noise in the audio and ensures the audio quality.

Moreover, in the technical solution disclosed by the present disclosure, obtaining an audio sampling rate of the audio includes the following steps:
first of all, audio description information transmitted by the external media source is received;
then, an audio sampling rate of the audio contained in the audio description information is obtained by analyzing the audio description information.

The audio description information is generally packaged into a data package with audio. Besides, in the audio description information, an audio sampling rate of the audio is contained. Therefore, the audio sampling rate of the audio may be obtained by analyzing the audio description information.

Further, in the method of audio debugging for television as disclosed by the present disclosure, the operation of storing a sampling result into a storage area is disclosed. Wherein storing a sampling result into a storage area includes the following steps:
first of all, after obtaining an audio sampling rate of the audio by the audio description information, it is judged whether the audio sampling rates of the audio and the television are identical;
then, if the audio sampling rates of audio and the television are identical, the sampling result is stored into an original storage area of the television; if the audio sampling rates of audio and the television are different, a new storage area is created and the sampling result is stored into the new storage area.

In the prior art, the television receives audios provided by external media sources according to its own audio sampling rate, and stores the received audios into an original storage area of the television. In this case, in the present disclosure, if the audio sampling rates of the audio and the television are identical, the sampling result is stored into an original storage area of the television.

Moreover, if the audio sampling rates of the audio and the television are different, the television generally creates a new storage area and stores the sampling result into the new storage area, which makes it easy to search the audio when the audio is played.

Further, the method of audio debugging for television disclosed by the present disclosure further includes: building a corresponding relationship between the storage area for storing the sampling result and the sampling result when storing the sampling result.

If the sampling result is stored into an original storage area of the television, a corresponding relationship between the sampling result and the original storage area of the television is built; if the sampling result is stored into a new storage area, a corresponding relationship between the sampling result and the new storage area is built.

After building a corresponding relationship between the storage area of the sampling result and the sampling result, when it is required to play the audio, the corresponding storage area may be found according to the corresponding relationship; meanwhile, the sampling result stored in the storage area may be obtained and played.

Further, the method of audio debugging for television disclosed by the present disclosure further includes:
obtaining attribute information of the audio and storing a corresponding relationship between the attribute information of the audio and the audio sampling rate of the audio; obtaining the audio sampling rate of the audio according to the attribute information of the audio and the corresponding relationship, when the audio is required to be received again.

In above steps, after the audio sampling rate of an audio is obtained, a corresponding relationship between the attribute information of the audio and the audio sampling rate of the audio may be stored. In this case, when the audio is required to be received again, attribute information of the audio is obtained; then, the audio sampling rate of the audio is obtained according to the attribute information of the audio and the corresponding relationship, thus analyzing the audio description information is no longer needed.

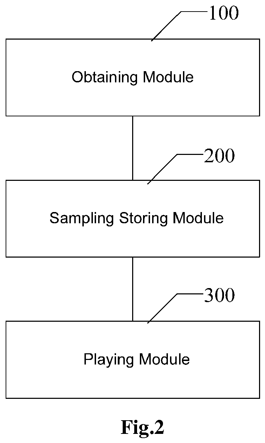

Correspondingly, the second embodiment of the present disclosure discloses a device of audio debugging for television. Referring to a structure diagram as shown in Figure 2, the device of audio debugging for television includes: an obtaining module 100, a sampling storing module 200 and a playing module 300.

The obtaining module 100 is configured to obtain an audio sampling rate of an audio when the audio in an external media source is required to be received.

The sampling storing module 200 is configured to sample the audio according to the audio sampling rate of the audio and store a sampling result into a storage area.

The playing module 300 is configured to obtain the sampling result from the storage area and play it when the audio is required to be played.

The television has its own fixed audio sampling rate, but audios provided by external media sources may have various audio sampling rates. In this case, in the present disclosure, after obtaining an audio sampling rate of an audio itself, the television takes samples by the audio sampling rate of the audio.

The second embodiment of the present disclosure discloses a device of audio debugging for television. By the device, when it is required to receive the audio in an external media source, the audio is sampled by an audio sampling rate of the audio and a sampling result obtained is stored; when it is required to play the audio, the sampling result is obtained again from the storage area and played. By the method, the television receives and plays an audio in an audio sampling rate of the audio itself, thereby avoiding the appearance of noise in the audio and improving the audio quality.

For example, if the audio sampling rate of the television is set as 48KHz while the audio sampling rate of an audio in external media sources is 44.1 KHz, then the television receives and plays the audio by the audio sampling rate at 44.1 KHz, which avoids the occurrence of noise in the audio and ensures the audio quality.

Further, the obtaining module 100 includes:
a description information receiving unit configured to receive audio description information transmitted by the external media source; and
a sampling rate obtaining unit configured to obtain an audio sampling rate of the audio contained in the audio description information by analyzing the audio description information.

The audio description information is generally packaged into a data package with audio. Besides, in the audio description information, an audio sampling rate of the audio is contained. Therefore, the audio sampling rate of the audio may be obtained by analyzing the audio description information.

Further, the sampling storing module 200 includes:
a judging unit configured to judge whether audio sampling rates of the audio and the television are identical after an audio sampling rate of the audio is obtained by the audio description information;
a first storing unit configured to store the sampling result into an original storage area of the television if the audio sampling rates of the audio and the television are identical; and
a second storing unit configured to create a new storage area if the audio sampling rates of the audio and the television are different and store the sampling result into the new storage area.

In the prior art, the television receives audios provided by external media sources according to its own audio sampling rate, and stores the received audios into an original storage area of the television. In this case, in the present disclosure, if the audio sampling rates of audio and the television are identical, the sampling result is stored into the original storage area of the television.

Moreover, if the audio sampling rates of the audio and the television are different, the television generally creates a new storage area and stores the sampling result into the new storage area, which makes it easy to search the audio when the audio is played.

Further, the device of audio debugging for television disclosed by the present disclosure further includes:
a first corresponding relationship building module configured to build a corresponding relationship between the storage area for storing the sampling result and the sampling result when storing the sampling result.

After building a corresponding relationship between the storage area of the sampling result and the sampling result, when it is required to play the audio, the corresponding storage area may be found according to the corresponding relationship; meanwhile, the sampling result stored in the storage area may be obtained and played.

Further, the device of audio debugging for television disclosed by the present disclosure further includes:
an attribute information building module configured to obtain attribute information of the audio;
a second corresponding relationship building module configured to store a corresponding relationship between the attribute information of the audio and the audio sampling rate of the audio; and
an audio sampling rate obtaining module configured to obtain the audio sampling rate of the audio according to the attribute information of the audio and the corresponding relationship, when the audio is required to be received again.

By the attribute information building module, the second corresponding relationship building module and the audio sampling rate obtaining module disclosed by the present disclosure, after the audio sampling rate of an audio is obtained, a corresponding relationship between the attribute information of the audio and the audio sampling rate of the audio may be stored. In this case, when the audio is required to be received again, the attribute information of the audio is obtained; then, the audio sampling rate of the audio is obtained according to the attribute information of the audio and the corresponding relationship, thus analyzing the audio description information is no longer needed.

With respect to the device in above embodiments, the specific modes for performing operation of each module have been described in details in the embodiments relevant to the method, and will not be illustrated here again in detail.

According to the third embodiment of the present disclosure, a terminal is provided, which includes the device of audio debugging for television provided by the second embodiment.

The embodiments of the present disclosure further provides a computer storage medium, wherein the computer storage medium may store program, and when the program is executed, part or all of steps in respective modes of the method of audio debugging for television provided by the embodiment in Figure 1 can be realized.

The above are only specific embodiments of the present disclosure and the scope of the disclosure is not limited hereto. Any equivalent modifications or substitutions easily conceived by one of ordinary skills in the art, within the technology scope of the present disclosure, shall fall into the scope of the present disclosure. Therefore, the scope of the disclosure shall be defined by the accompanying claims.

## Claims

1. A method of audio debugging for television, wherein the method comprises:
obtaining an audio sampling rate of an audio when the audio in an external media source is required to be received;
sampling the audio according to the audio sampling rate of the audio and storing a sampling result into a storage area; and
obtaining the sampling result from the storage area and playing it when the audio is required to be played.

2. The method of audio debugging for television according to claim 1, wherein the step of obtaining an audio sampling rate of the audio comprises:
receiving audio description information transmitted by the external media source; and
obtaining the audio sampling rate of the audio contained in the audio description information by analyzing the audio description information.

3. The method of audio debugging for television according to claim 2, wherein the step of storing a sampling result into a storage area comprises:
judging whether the audio sampling rates of the audio and the television are identical after obtaining the audio sampling rate of the audio by the audio description information;
storing the sampling result into an original storage area of the television if the audio sampling rates of the audio and the television are identical; and
creating a new storage area if the audio sampling rates of the audio and the television are different, and storing the sampling result into the new storage area.

4. The method of audio debugging for television according to claim 3, wherein the method further comprises:
building a corresponding relationship between the storage area for storing the sampling result and the sampling result when storing the sampling result.

5. The method of audio debugging for television according to claim 1, wherein the method further comprises:
obtaining attribute information of the audio and storing a corresponding relationship between the attribute information of the audio and the audio sampling rate of the audio; and
obtaining the audio sampling rate of the audio according to the attribute information of the audio and the corresponding relationship, when the audio is required to be received again.

6. A device of audio debugging for television, wherein the device comprises:
an obtaining module configured to obtain an audio sampling rate of an audio when the audio in an external media source is required to be received;
a sampling storing module configured to sample the audio according to the audio sampling rate of the audio and store a sampling result into a storage area; and
a playing module configured to obtain the sampling result from the storage area and play it when the audio is required to be played.

7. The device of audio debugging for television according to claim 6, wherein the obtaining module comprises:
a description information receiving unit configured to receive audio description information transmitted by the external media source; and
a sampling rate obtaining unit configured to obtain an audio sampling rate of the audio contained in the audio description information by analyzing the audio description information.

8. The device of audio debugging for television according to claim 7, wherein the sampling storing module comprises:
a judging unit configured to judge whether audio sampling rates of the audio and the television are identical after an audio sampling rate of the audio is obtained by the audio description information;
a first storing unit configured to store the sampling result into an original storage area of the television if the audio sampling rates of the audio and the television are identical; and
a second storing unit configured to create a new storage area if the audio sampling rates of the audio and the television are different and store the sampling result into the new storage area.

9. The device of audio debugging for television according to claim 8, wherein the device further comprises:
a first corresponding relationship building module configured to build a corresponding relationship between the storage area for storing the sampling result and the sampling result when storing the sampling result.

10. The device of audio debugging for television according to claim 6, wherein the device further comprises:
an attribute information building module configured to obtain attribute information of the audio;
a second corresponding relationship building module configured to store a corresponding relationship between the attribute information of the audio and the audio sampling rate of the audio; and
an audio sampling rate obtaining module configured to obtain the audio sampling rate of the audio according to the attribute information of the audio and the corresponding relationship, when the audio is required to be received again.

11. A terminal comprising the device of audio debugging for television according to any one of claims 6-10.
